Europäisches Patentamt

European Patent Office

Office européen des brevets

(11) Numéro de publication: **0 395 489**
**A1**

## DEMANDE DE BREVET EUROPEEN

(21) Numéro de dépôt: 90401098.0

(22) Date de dépôt: 24.04.90

(51) Int. Cl.⁵: **B62D 11/20, B62D 55/265**

(30) Priorité: 28.04.89 FR 8905712

(43) Date de publication de la demande:
**31.10.90 Bulletin 90/44**

(84) Etats contractants désignés:
**BE CH DE GB LI**

(71) Demandeur: **COMMISSARIAT A L'ENERGIE ATOMIQUE**
**31/33, rue de la Fédération**
**F-75015 Paris(FR)**

(72) Inventeur: **Detriche, Jean-Marie**
**6 Résidence La Gaillarderie**
**F-78590 Noisy Le Roi(FR)**

(74) Mandataire: **Mongrédien, André et al**
**c/o BREVATOME 25, rue de Ponthieu**
**F-75008 Paris(FR)**

(54) **Véhicule à chenilles adapté à tourner facilement.**

(57) Véhicule à chenilles munies d'éléments d'appui au sol, tels que des ventouses (51), mobiles transversalement par rapport au châssis. Cette disposition permet de procéder à des déplacements échelonnés des ventouses (51) se traduisant par des virages du véhicule, sans devoir décoller toutes les ventouses à la fois, ce qui empêche les patinages et maintient le véhicule au sol.

Application aux robots devant se déplacer sur des surfaces de pente quelconque.

FIG. 2

EP 0 395 489 A1

La présente invention se rapporte à un véhicule à chenilles qui a été conçu pour pouvoir tourner facilement.

Ces véhicules tournent ordinairement en appliquant aux chenilles latérales des vitesses d'avance différentes. Il en résulte que les chenilles patinent de manière aléatoire. Ceci est inadmissible dans le cas d'un robot sans conducteur dont le contrôle de la position est perdu, et plus encore dans le cas de chenilles munies de ventouses destinées à garantir l'adhérence de véhicules sur des surfaces de pente quelconque, car les ventouses sont pratiquement toutes décollées de la surface simultanément et ne peuvent plus remplir leur rôle.

Un système perfectionné consiste à prévoir entre les chenilles un corps d'appui central muni de ventouses. Quand on désire tourner, on abaisse ce corps au sol de manière à soulever le véhicule et faire décoller les chenilles. On fait ensuite pivoter le véhicule par rapport au corps d'appui, après quoi les chenilles sont abaissées et le mouvement d'avance normal peut reprendre. Ce système est efficace et précis mais implique une complication du véhicule puisque l'élément d'appui est inutile pour d'autres fins. Le fonctionnement est d'autre part séquentiel car les virages ne s'effectuent qu'en l'absence de mouvements d'avance, ce qui diminue la rapidité d'évolution du véhicule.

L'invention évite par contre de faire appel à des équipements superflus pour l'avance et l'adhérence du véhicule. Elle est relative, d'une façon générale, à des véhicules à chenilles dans lesquels les éléments d'appui au sol, tels que des ventouses, appartenant aux chenilles peuvent être soumis à des déplacements comprenant au moins une composante latérale et indépendants les uns des autres de manière à éviter les patinages tout en maintenant constamment un nombre d'éléments d'appui au sol suffisant pour maintenir un appui stable du véhicule au sol. On peut dire que le virage est échelonné.

Dans un premier groupe de conceptions, le véhicule est pourvu de chenilles surnuméraires par rapport aux chenilles qui seraient strictement nécessaires pour maintenir l'appui stable et la stabilité du véhicule, mais qui cependant améliorent cet appui au cours de l'avance rectiligne du véhicule. Au cours d'un virage, les chenilles sont successivement soulevées et orientées avant d'être de nouveau appliquées au sol.

Dans un autre groupe de réalisations, les chenilles elles-mêmes occupent une position invariable sur le véhicule mais leurs éléments d'appui sont montés sur les bandes de roulement avec un débattement transversal possible. On constatera plus loin que cette conception rend possible que les éléments d'appui collés au sol soient alignés suivant un axe croisé avec l'axe de la chenille qui les porte. Le réalignement des éléments d'appui et des chenilles s'effectue automatiquement au cours de l'avance des chenilles, quand les éléments d'appui sont décollés du sol et passent sur la partie supérieure de la chenille.

Plus précisément, l'invention consiste, sous sa forme la plus générale, en un véhicule comprenant un châssis, des chenilles comprenant chacune une bande de roulement munie d'éléments d'appui au sol, des moyens de liaison entre le châssis et les chenilles et d'autres moyens de liaison pour maintenir les éléments d'appui sur la surface extérieure des bandes de roulement, caractérisé en ce que les divers moyens de liaison sont agencés de façon à autoriser des déplacements latéraux des éléments d'appui par rapport au châssis, ces déplacements étant indépendants pour des éléments d'appui appartenant à des chenilles différentes.

Les éléments d'appui sont notamment des ventouses.

Si les moyens de liaison entre le châssis et les chenilles sont agencés de façon à permettre de soulever indépendamment les chenilles du sol, une réalisation préférée est relative à un véhicule qui comprend quatre chenilles et dans lequel les moyens de liaison entre le châssis et les chenilles comprennent une glissière circulaire fixée au châssis, des paliers engagés dans la glissière et chacun fixés à une chenille, et des moyens moteurs pour faire coulisser indépendamment les paliers dans la glissière, les éléments d'appui étant fixés aux chenilles ; les moyens de liaison entre le châssis et les chenilles peuvent encore comprendre des moyens pour faire pivoter les chenilles autour d'axes perpendiculaires au sol. Les chenilles peuvent alors être munies de moyens pour les soulever indépendamment du sol comme dans la réalisation précédente, ou bien les moyens de liaison entre les bandes de roulement et les éléments d'appui comprennent des boîtiers comportant chacun des moyens de guidage coulissant en direction transversale d'un élément porteur d'un élément d'appui et des moyens de rappel ramenant l'élément d'appui à une position centrale du boîtier.

Avantageusement, l'élément porteur est un second boîtier comportant des moyens de guidage coulissant d'un plateau auquel l'élément d'appui est assujetti en direction longitudinale, des moyens de rappel ramenant le plateau à une position centrale du second boîtier, et par ailleurs les moyens de liaison entre les bandes de roulement et les éléments d'appui comprennent également un joint tournant.

Enfin, avec de tels moyens de liaison entre bandes de roulement et éléments d'appui, les chenilles peuvent être fixées au châssis. Les virages sont alors produits par des vitesses différentes imprimées aux chenilles.

L'invention va maintenant être décrite plus en détail à l'aide des figures suivantes annexées à titre illustratif et nullement limitatif :

- la figure 1 représente une première conception de l'invention ;

- les figures 1A à 1E explicitent comment s'effectuent les virages avec cette conception ;

- les figures 2 et 3 représentent en perspective et en vue longitudinale une chenille conforme à une deuxième conception de l'invention ; et

- les figures 4, 5 et 6 représentent trois modes de mise en oeuvre de la deuxième conception de l'invention.

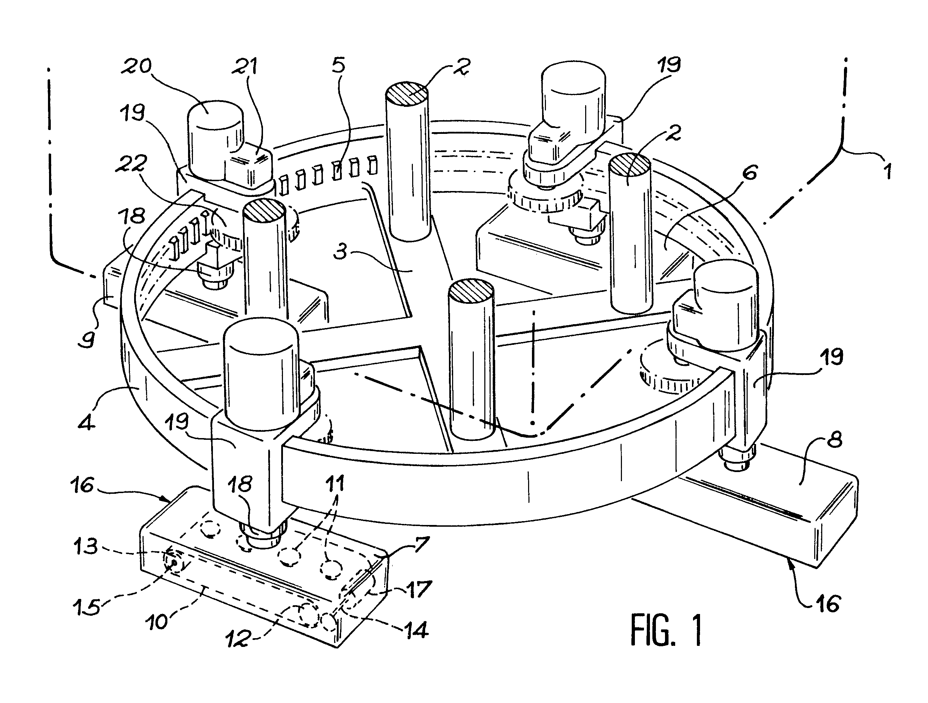

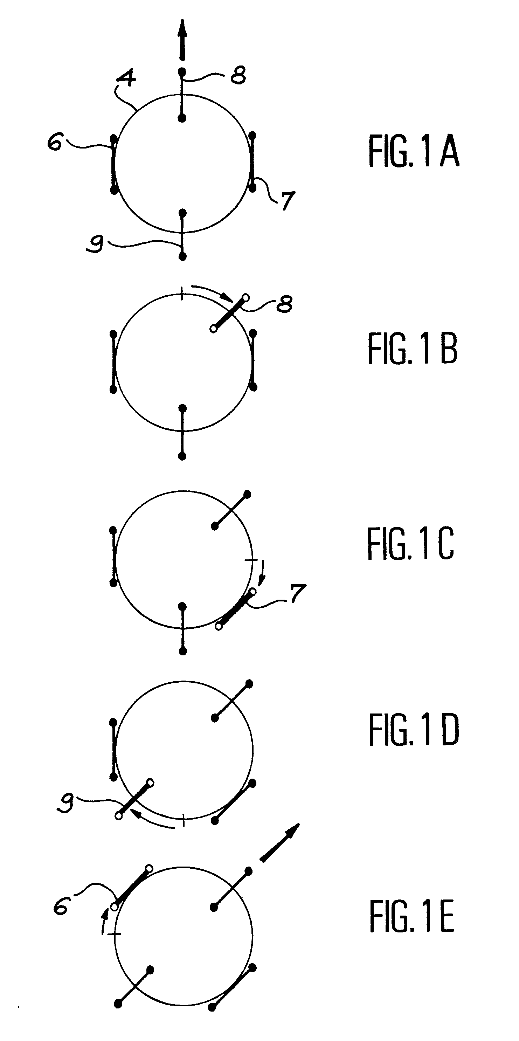

La première conception de l'invention (figure 1) concerne un véhicule composé d'un châssis 1 porteur en particulier d'une charge utile et d'organes de commande non représentés en détail. Des éléments de liaison 2 supportent le châssis 1 et prennent appui sur un croisillon 3 entouré d'une glissière circulaire 4 qui lui est fixée. La glissière circulaire 4 comprend une portion de surface latérale interne en crémaillère 5.

Le véhicule comprend en outre quatre chenilles : deux chenilles latérales gauche et droite 6 et 7 et deux chenilles centrales, une (8) à l'avant et l'autre (9) à l'arrière. Les chenilles sont semblables pour l'essentiel et comprennent classiquement une bande de roulement 10, munie sur sa surface extérieure de ventouses d'appui au sol 11 qui lui sont fixées par des boulons non représentés. Les bandes de roulement 10 des chenilles latérales 6 et 7 sont tendues entre un barbotin 12 à l'avant et une roue menée 13 à l'arrière, que des axes 14 et 15, assujettis dans des paliers d'une armature 16 formant capot, maintiennent en place. L'axe 14 est entraîné par un motoréducteur 17.

Les chenilles centrales 8 et 9 sont de constitution semblable sauf qu'elles ne sont pas motorisées mais purement passives.

On remarquera que les bandes de roulement 10 sont parallèles entre elles, tangentes à la glissière 4 pour les chenilles latérales 6 et 7 et perpendiculaires à la glissière 4 pour les chenilles centrales 8 et 9.

L'armature 16 des quatre chenilles 6 à 9 est fixée à la tige d'un vérin 18 dont le cylindre est fixé à un palier arqué 19 pouvant coulisser sur la glissière circulaire 4. Chaque palier arqué 19 porte un moteur 20 et un réducteur 21 qui s'achève par un pignon d'attaque 22 engrenant avec la crémaillère 5. La rotation du moteur 20 fait donc déplacer le palier arqué 19 et la chenille correspondante le long de la glissière circulaire horizontale 4, alors que le vérin 18 permet de soulever du sol la chenille concernée. Les paliers arqués 19 ont bien entendu une section ouverte pour dégager la crémaillère 5 et pour ne pas buter contre le croisillon 3.

Quand un virage est décidé, le véhicule est arrêté. On soulève successivement chaque chenille du sol au moyen de son vérin 18 et on la fait glisser le long de la glissière circulaire 4, après quoi on la fait de nouveau reposer au sol. Quand les quatre paliers arqués ont accompli un mouvement de même amplitude, ils sont de nouveau parallèles et le mouvement d'avance peut reprendre dans une autre direction.

Les figures 1A à 1E explicitent ce processus et montrent que les chenilles avant 8, droite 7, arrière 9 et gauche 6 peuvent être successivement soulevées, orientées par glissement et reposées. Quand toutes les chenilles sont à nouveau parallèles, le mouvement d'avance peut reprendre dans une direction définie par l'orientation des chenilles, décalée de la direction d'avance précédente d'un angle de quarante-cinq degrés vers la droite d'après l'exemple des figures 1A à 1E.

Cette conception implique l'emploi des chenilles centrales 8 et 9 qui ne sont pas indispensables à l'avance du véhicule et doivent donc être considérées comme surnuméraires. Toutefois, elles offrent une meilleure assise sur la surface d'évolution, ce qui permet de raccourcir les chenilles latérales motrices.

Un moyen de commande des déplacements des chenilles sur la glissière 4 fournissant des résultats équivalents peut être constitué par une courroie en boucle fermée parallèle à la glissière 4 et d'un embrayage sur chaque chenille. La courroie est animée d'un mouvement de défilement au moment des virages et les embrayages sont successivement actionnés une fois la chenille correspondante soulevée du sol. La crémaillère 5 et les moteurs 20 en particulier sont alors supprimés. Les virages sont exécutés de la même façon.

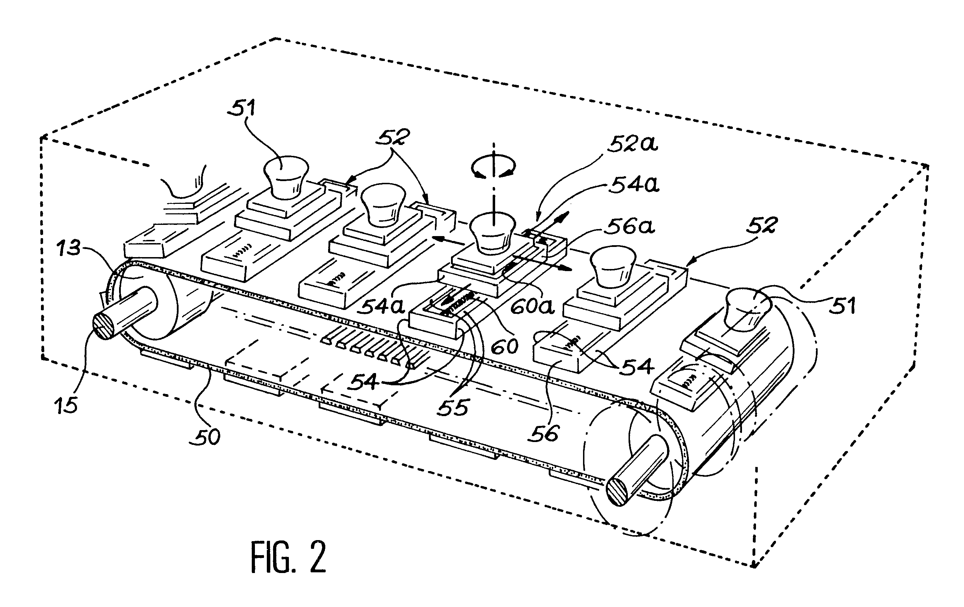

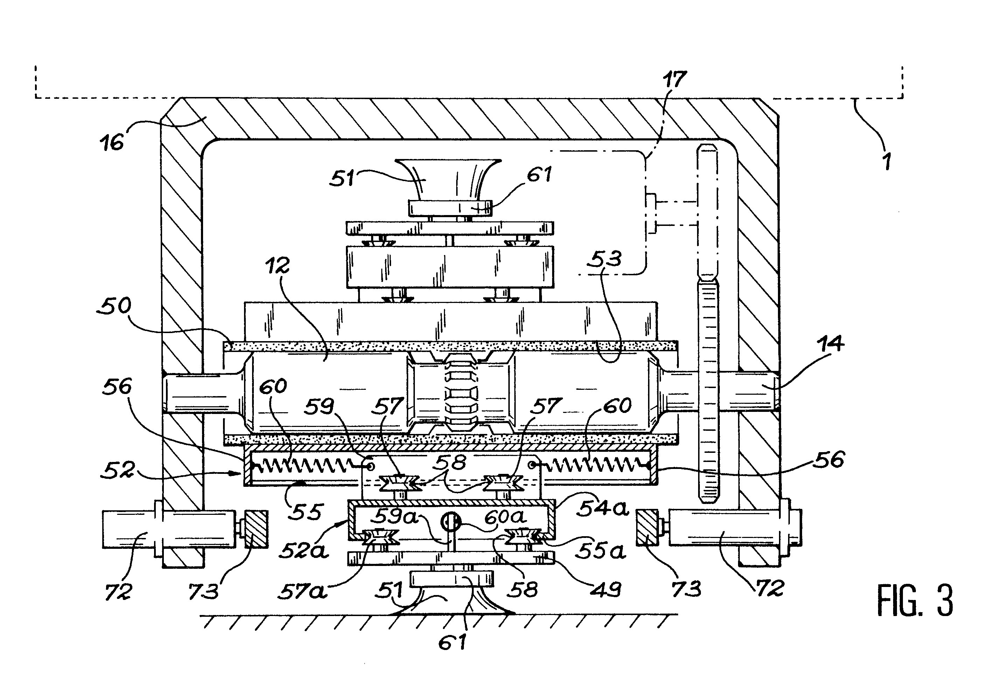

On passe maintenant aux figures 2 et 3 pour décrire une chenille selon la seconde conception de l'invention. Elle comprend toujours une bande 50 de roulement et des ventouses d'appui au sol 51, mais qui ne sont maintenant plus reliées rigidement à la bande 50. Ce sont maintenant des premiers boîtiers de guidage 52 qui sont fixés sur la surface extérieure de la bande 50. Chacun comprend, outre une face de fixation 53 à la bande 50, deux faces d'extension transversale 54 munies d'un rebord orienté vers l'intérieur 55 à l'opposé de la face supérieure 53, ainsi que deux faces 56, plus courtes, d'extension longitudinale pour refermer le boîtier.

Un second boîtier 52a coulisse le long de chaque premier boîtier 52 et légèrement à l'extérieur de ce boîtier, à l'opposé de la face 53. Des roulettes folles 57 sont montées sur les seconds boîtiers 52a ; elles sont entaillées d'une gorge centrale 58 dans laquelle pénètre un des rebords 55. Plus précisément, chaque second boîtier 52a porte quatre roulettes 57 dont deux sont engagées sur chaque rebord 55. Le seul mouvement possible du plateau 56 par rapport au boîtier 52 est donc un mouvement de translation ou de coulissement transversal.

Les seconds boîtiers 52a sont équipés d'une nervure 59 orientée vers le premier boîtier 52 associé et qui est disposée entre les roulettes 57 parallèlement aux bords d'extension latérale 54. Deux ressorts 60 sont tendus chacun entre une extrémité de la nervure 59 et une face d'extension longitudinale 56. La disposition d'ensemble est totalement symétrique. Il en résulte qu'en l'absence de sollicitation sur le second boîtier 52a, celui-ci se retrouve à mi-course du boîtier 52, mais que des mouvements transversaux des seconds boîtiers 52a sur la bande de roulement 50 sont cependant possibles.

Les seconds boîtiers 52a sont constitués, outre d'une face d'appui 53a portant la nervure 59 et les roulettes 57, de deux faces d'extension longitudinale 54a munies d'un rebord 55a orienté vers l'intérieur et de deux faces d'extension transversale 56a plus courtes, ces quatre faces étant jointes à la face d'appui 53a et orientées vers l'extérieur de la bande 50. Un plateau 49 porte quatre roulettes 57a semblables aux roulettes 57 déjà rencontrées et dont deux sont engagées dans chaque rebord 55a par leur gorge 58. Une nervure 59a est fixée au plateau 49 et s'étend entre les roulettes 57a parallèlement aux faces d'extension longitudinale 54a. Deux ressorts 60a sont chacun tendus entre une extrémité de la nervure 59a et une face d'extension transversale 56a suivant une disposition symétrique.

Le second boîtier 52a est donc presque semblable au premier boîtier 52 sauf qu'il autorise des mouvements longitudinaux du plateau 49.

Chaque ventouse 51 est réunie à un plateau 49 par un joint tournant 61 leur permettant des rotations relatives autour d'un axe perpendiculaire au sol.

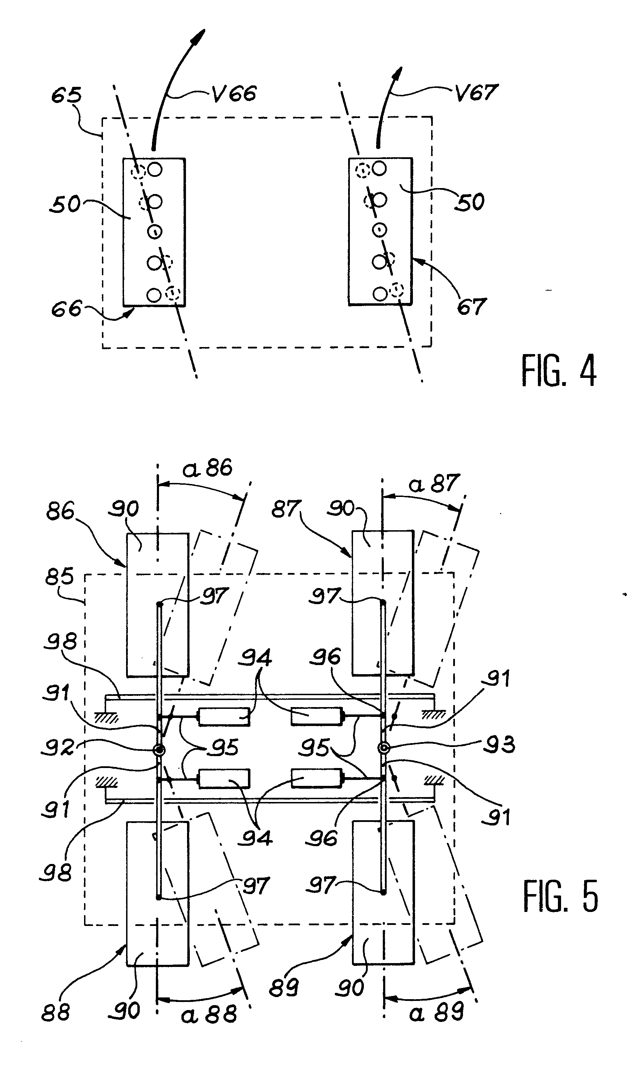

Un véhicule équipé de ces chenilles originales est représenté figure 4. Le châssis est référencé par 65, une chenille gauche par 66 et une chenille droite par 67. Les deux chenilles 66 et 67 sont parallèles, symétriques, et il n'y en a pas d'autre sur le véhicule.

Quand un virage est décidé, les bandes 50 sont entraînées à des vitesses différentes. Dans le cas d'un virage vers la droite, la chenille de gauche 66 avance à une vitesse $V_{66}$ plus grande que la vitesse $V_{67}$ de la chenille de droite 67. Avec des chenilles classiques, des patinages sont inévitables ; avec les chenilles décrites ici, les ventouses 51 restent fermement collées au sol et les bandes de roulement 50 prennent une disposition oblique par rapport à elles : la rotation des bandes de roulement 50 et du reste du véhicule par rapport à celles des ventouses 51 qui sont collées au sol oriente les bandes de roulement 50 dans une direction inclinée vers la droite quand on se déplace d'arrière en avant par rapport à la direction d'alignement -représentée par deux lignes en tirets- des ventouses 51 collées au sol. Par contre, dès que les ventouses 51 sont décollées du sol, les ressorts 60 des premiers boîtiers 52 les ramènent en position transversale médiane par rapport aux bandes de roulement 50.

Les seconds boîtiers 52a, leurs ressorts 60a et les joints tournants 61 permettent de ne pas transmettre aux ventouses 51 les composantes longitudinale et rotative du mouvement de virage du châssis 65.

Le véhicule qui vient d'être décrit est donc à peine plus compliqué qu'un véhicule à chenilles classique et n'implique ni allongement des chenilles ni augmentation de leur nombre. Lorsque le véhicule évolue en ligne droite, il est possible de mettre en action un système stabilisateur composé pour chaque chenille de deux paires de vérins 72 liés au châssis 65. Deux règles 73 sont fixées à leurs extrémités aux tiges des vérins d'une paire respective. Quand le véhicule se déplace en ligne droite, les tiges des vérins 72 sont étendues pour que les règles 73 parviennent tout près des faces d'extension longitudinale 54a du second boîtier 52a et maintiennent ce dernier sensiblement à mi-course dans le premier boîtier 52. Aucun glissement anarchique des ventouses 51 dû par exemple à des aspérités du sol n'est donc à redouter. Quand un virage est décidé, les règles 73 sont écartées.

Les chenilles décrites peuvent être utilisées d'autres manières. La figure 5 montre une deuxième réalisation possible les utilisant. Le châssis du véhicule est référencé par 85 et l'on observe quatre chenilles 86, 87, 88 et 89, les chenilles 86 et 88 étant en prolongement sur une ligne longitudinale à gauche du véhicule et les chenilles 87 et 89 en prolongement sur une ligne longitudinale à droite. Comme dans la première conception de l'invention, deux chenilles sont motrices et deux autres sont des chenilles menées. Les chenilles motrices peuvent être à l'avant, à l'arrière ou disposées en diagonale.

Chaque chenille est pourvue d'une armature 90 à laquelle est fixé un levier 91. Les leviers 91 associés aux chenilles de gauche 86 et 88 se rejoignent en un pivot commun gauche 92 fixé au châssis 85, et de même les leviers 91 associés aux chenilles de droite 87 et 89 se rejoignent à un pivot droit 93 lié au châssis 85.

Quatre moteurs 94 déplacent chacun en translation une crémaillère 95. Les crémaillères 95 sont terminées par un palier 96 qui leur est articulé et qui coulisse sur un levier associé 91.

Il est possible d'orienter les chenilles 86 à 89 dans des directions indépendantes en faisant basculer les leviers 91 au moyen des moteurs 94. Le rayon de courbure du virage qui se produit alors est défini par les angles $a_{86}$ à $a_{89}$ que font les directions des chenilles 86 à 89 avec l'axe longitudinal X du véhicule. Les ventouses 51 restent fermement collées au sol pendant le virage. On pourrait toutefois envisager, selon un procédé analogue à celui rencontré pour la première conception, de disposer un vérin semblable à 18 verticalement sur le point de jonction 97 des leviers 91 aux armatures 90 pour soulever les chenilles 86 à 89 l'une après l'autre avant de procéder à leur orientation. Les ventouses pourraient alors être fixées à la bande de roulement comme dans la première conception.

Une conception à peu près équivalente n'utilise que deux moteurs pour orienter les quatre chenilles. On peut pour cela modifier le système de façon que les leviers 91 pivotent par rapport au châssis 85 autour d'un pivot qui soit situé à un emplacement intermédiaire du palier 96 et que les deux moteurs agissent chacun sur deux chenilles simultanément, la crémaillère aboutissant alors à la jonction de deux leviers 91 et se terminant par deux paliers coulissants et articulés indépendamment. Les angles d'orientation des chenilles gauches 86 et 88 seraient alors égaux en valeur absolue et opposés en signes, de même que ceux des chenilles de droite 87 et 89.

Le maintien des leviers 91 est assuré par des systèmes de tringlerie 98 transversales, formés d'une tringle au-dessus des leviers 91 et d'une autre tringle au-dessous de ces leviers. Les tringleries 98 sont fixées au châssis 85.

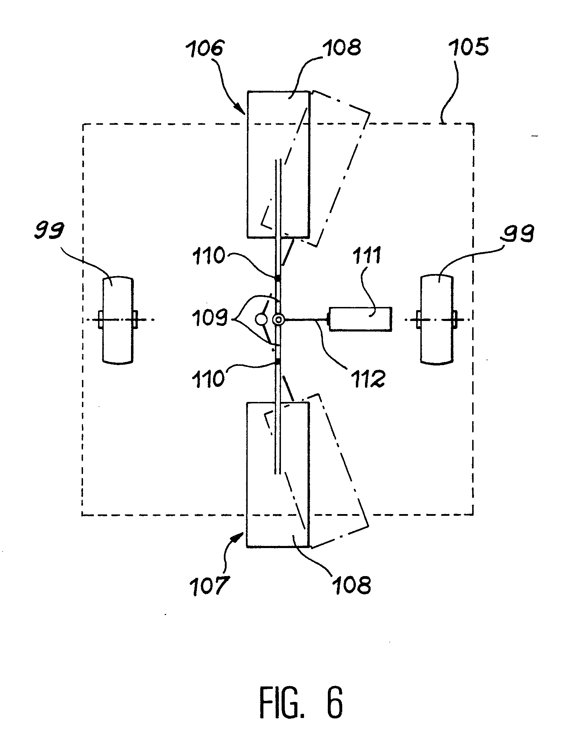

On représente enfin une troisième réalisation possible figure 6.

Le châssis est référencé par 105 et maintenu au-dessus du sol grâce à deux chenilles 106 et 107 centrales et en prolongement l'une à l'avant et l'autre à l'arrière, encadrées par deux roues ou chenilles non motorisées 99 à gauche et à droite pour assurer sa stabilité.

Les chenilles 106 et 107 sont munies d'une armature 108 à laquelle est fixé un levier 109. Les leviers 109 sont articulés sur le châssis 105 par des pivots intermédiaires 110 et basculés par un moteur 111 unique, fixé au châssis 105, qui entraîne une crémaillère 112 repoussant les extrémités concourantes des deux leviers 109.

Il serait possible ici, comme pour la réalisation précédente, d'utiliser deux moteurs pour mouvoir séparément les deux leviers 109. On pourrait ici encore établir des vérins verticaux pour soulever indépendamment les chenilles et les orienter successivement avant de les laisser retomber au sol. Une telle solution, qui ressemble à celle de la première conception, implique l'arrêt du véhicule au cours du virage, mais permet par contre d'effectuer des virages de grande amplitude à des rayons de courbure beaucoup plus faibles.

Le choix parmi ces diverses conceptions ou d'autres conceptions équivalentes également englobées par l'invention sera effectué en fonction des performances exigées du véhicule et des contraintes extérieures. L'invention peut être mise en oeuvre avec d'autres éléments d'appui que les ventouses qui ont cependant seules été mentionnées dans les exemples précédents car cette invention, qui évite de compromettre l'adhérence au sol, est particulièrement intéressante pour des véhicules devant se déplacer sur des surfaces d'orientation quelconque pour lesquelles ces éléments d'appui sont indispensables.

La première conception de l'invention est simple à mettre en oeuvre et offre une parfaite stabilité du corps du véhicule par rapport aux ventouses, alors que la seconde conception, où le corps du véhicule est flottant, est moins stable mais permet des déplacements plus rapides car les virages peuvent s'effectuer alors que le véhicule avance.

**Revendications**

1. Véhicule comprenant un châssis (1, 85, 105), des chenilles (6, 7, 8, 9) comprenant une bande de roulement (10, 50) munie d'éléments d'appui au sol (11, 51), des moyens de liaison (3, 18, 19, 91, 92, 93, 98, 109) entre le châssis et les chenilles et d'autres moyens de liaison (52, 52a, 61) pour maintenir les éléments d'appui sur la surface extérieure des bandes de roulement, caractérisé en ce que les divers moyens de liaison sont agencés de façon à autoriser des déplacements latéraux des éléments d'appui par rapport au châssis, ces déplacements étant indépendants pour des éléments d'appui appartenant à des chenilles différentes.

2. Véhicule suivant la revendication 1, caractérisé en ce que les éléments d'appui sont des ventouses.

3. Véhicule suivant l'une quelconque des revendications 1 ou 2, caractérisé en ce que les moyens de liaison entre le châssis et les chenilles comprennent des moyens (18) pour soulever indépendamment les chenilles du sol.

4. Véhicule suivant la revendication 3, caractérisé en ce qu'il comprend quatre chenilles (6, 7, 8, 9) et en ce que les moyens de liaison entre le châssis et les chenilles comprennent une glissière circulaire (4) fixée au châssis (1), des paliers (19) engagés dans la glissière (4) et fixés respectivement à chaque chenille, et des moteurs (20) pour faire coulisser indépendamment les paliers dans la glissière, les éléments d'appui étant fixés aux bandes de roulement.

5. Véhicule suivant la revendication 4, caractérisé en ce qu'une première chenille est à l'avant, une deuxième à l'arrière, une troisième à gauche et une quatrième à droite du véhicule.

6. Véhicule suivant l'une quelconque des revendications 1 à 3, caractérisé en ce que les moyens de liaison entre le châssis et les chenilles comprennent des moyens (91, 109, 94, 111) pour faire pivoter les chenilles (86, 87, 88, 89, 106, 107) autour d'axes perpendiculaires au sol.

7. Véhicule suivant la revendication 6, caractérisé en ce qu'il comprend quatre chenilles (86, 87, 88, 89).

8. Véhicule suivant la revendication 7, caractérisé en ce que les chenilles sont en prolongement suivant deux lignes longitudinales à gauche et à droite du véhicule.

9. Véhicule suivant la revendication 6, caractérisé en ce qu'il comprend deux chenilles en prolongement sur une ligne longitudinale centrale du véhicule et des roulettes latérales (99) d'appui au sol.

10. Véhicule suivant l'une quelconque des revendications 6 à 9, caractérisé en ce que les moyens de liaison entre les chenilles et le châssis comprennent un levier (91, 109) pivotant autour d'un point fixé au châssis sous l'action d'un moteur.

11. Véhicule suivant l'une quelconque des revendications 1, 2, 3, 6, 7, 8, 9 ou 10, caractérisé en ce que les moyens de liaison entre les bandes de roulement et les éléments d'appui comprennent des boîtiers (52) comportant chacun des moyens de guidage coulissant en direction transversale d'un élément porteur d'un élément d'appui et des moyens de rappel (60) ramenant l'élément d'appui à une position centrale du boîtier.

12. Véhicule suivant la revendication 11, caractérisé en ce que l'élément porteur est un second boîtier (52a) comportant des moyens de guidage coulissant en direction longitudinale d'un plateau auquel l'élément d'appui est assujetti, des moyens de rappel ramenant le plateau (60a) à une position centrale du second boîtier.

13. Véhicule suivant l'une quelconque des revendications 11 ou 12, caractérisé en ce que les moyens de liaison entre les bandes de roulement et les éléments d'appui comprennent également un joint tournant (61).

14. Véhicule suivant la revendication 1, caractérisé en ce que les chenilles sont fixes par rapport au châssis.

15. Véhicule suivant la revendication 14, caractérisé en ce que les chenilles sont au nombre de deux, l'une (66) à gauche et l'autre (67) à droite du véhicule.

16. Véhicule suivant l'une quelconque des revendications 11 à 14, caractérisé en ce que chaque chenille est munie de deux règles longitudinales (73) déplaçables pour encadrer l'élément porteur de l'élément d'appui et le maintenir à la position centrale du boîtier.

FIG. 1

FIG.1 A

FIG.1 B

FIG.1 C

FIG.1 D

FIG.1 E

FIG. 2

FIG. 3

EP 0 395 489 A1

FIG. 4

FIG. 5

FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | WO-A-8502135 (DALSEIDE AND CO) <br> * abrégé; revendication 1; figures 2, 3 * | 1, 2, 14, 15 | B62D11/20 <br> B62D55/265 |
| A | US-A-2132184 (POCHE) <br> * page 2, colonne de gauche, ligne 22 – page 2, colonne de droite, ligne 19; figures 4-6, 8, 9 * | 3, 4 | |
| A | US-A-4029165 (MILLER ET AL) <br> * abrégé; figures 1, 3, 5, 6, 9, 10 * | 4, 6, 7, 8 | |
| A | DE-A-3137580 (BUCKAU-WALTHER AG) <br> * figures 1, 2 * | 10 | |
| A | DE-B-2216669 (FRIED KRUPP GMBH) <br> * revendications 1-3; figures 1, 2 * | 11-13 | |
| A | US-A-2775491 (IVORY) <br> * colonne 2, lignes 17 – 59; figures 3, 5, 6 * | 1, 2, 14-16 | |
| A | EP-A-10034 (COMMISSARIAT A L'ENERGIE ATOMIQUE) <br> * abrégé; figures 5, 6, 8 * | 2, 3 | DOMAINES TECHNIQUES RECHERCHES (Int. Cl.5 ) |
| A,P | FR-A-2624824 (MITSUBISHI KAKOKI KAISHA LTD ET KAKOKI ENGINEERING SERVICE CO LTD) <br> * page 3, ligne 28 – page 4, ligne 14; revendications 1-3; figures 1, 2, 5 * | 1, 2 | B62D |

Le présent rapport a été établi pour toutes les revendications

| Lieu de la recherche | Date d'achèvement de la recherche | Examinateur |
|---|---|---|
| LA HAYE | 23 JUILLET 1990 | MYON G.J-P. |